# EUROPEAN PATENT APPLICATION

(11) **EP 4 607 674 A1**
(43) Date of publication of application: **27.08.2025**
(21) Application number: 24159089.2
(22) Date of filing: 22.02.2024
(51) Int. Cl.: H01M 50/291, H01M 10/42, H01M 50/209, H01M 50/249, H01M 50/271, H01M 50/276, H01M 50/342

(54) **COVER STRUCTURE FOR BATTERY MODULE AND BATTERY MODULE COMPRISING THE COVER STRUCTURE**

(71) Applicant: VOLVO TRUCK CORPORATION, 405 08 Göteborg (SE)
(72) Inventor: ROUT, Dhirendra, 422 54 GÖTEBORG (SE)
(74) Representative: Kransell & Wennborg KB

(57) **Abstract**

A cover structure (100) for a battery module and a battery module configured to hold a plurality of battery cells, the cover structure comprising: a first holding rail (102) and a second holding rail (104), each holding rail having corresponding alignment elements (112a-b); and a plurality of abrasion-resistant cover plates (106) positioned between the first holding rail and the second holding rail, wherein each cover plate includes a breakable opening (108) configured to facilitate gas exhaust in the event of a thermal runaway; and each cover plate comprises alignment elements (110a-b) at opposing ends, the alignment elements being configured to engage with the corresponding alignment elements (112a-b) of the first and second holding rails to position each cover plate between the first and second holding rails.

## Description

### TECHNICAL FIELD

The disclosure relates generally to battery modules for vehicles. In particular aspects, the disclosure relates to a cover structure for a battery module configured to hold a plurality of battery cells. The disclosure can be applied to heavy-duty vehicles, such as trucks, buses, and construction equipment, among other vehicle types. The disclosure can be applied to marine vessels and the like. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

In the event of a thermal runaway, efficient management of hot gases and particles within the battery pack is crucial to prevent rapid thermal spread. Strategically designed chimneys and channels within the pack have been utilized to guide and channel hot gases, ensuring controlled pathways that inhibit thermal propagation and limit the acceleration of the runaway process. Vents strategically positioned within the pack are set to open at specific pressures, enabling the release of accumulated hot gases. Meanwhile, specialized trapping mechanisms are deployed at designated locations within the pack to contain and prevent particles from exiting. This containment is essential to mitigate the risk of the particles igniting external gases, reducing potential hazards outside the battery pack. Accordingly, it is desirable to provide improved battery module designs for mitigating damage caused by a thermal runaway event.

### SUMMARY

According to a first aspect of the disclosure, it is provided a cover structure for a battery module configured to hold a plurality of battery cells, the cover structure comprising: a first holding rail and a second holding rail, each rail having corresponding alignment elements; and a plurality of abrasion-resistant cover plates positioned between the first holding rail and the second holding rail, wherein each cover plate includes a breakable opening configured to facilitate gas exhaust in the event of a thermal runaway; and each cover plate comprises alignment elements at opposing ends, the alignment elements being configured to engage with the corresponding alignment elements of the first and second holding rails to position each cover plate between the first and second holding rails.

The described cover structure provides enhanced safety and manufacturing efficiency for vehicle battery modules. The utilization of abrasion-resistant cover plates, each having a breakable opening, addresses safety challenges associated with thermal runaway in battery cells. The cover structure thereby mitigates the risk of fire or explosion in a battery module by managing the pressure buildup within the battery module through controlled gas exhaust.

Another benefit of the described cover structure is its modular design, which facilitates precise alignment and secure positioning of the cover plates between the holding rails as a result of the corresponding alignment elements. It can thereby be ensured that each cover plate is correctly placed during assembly of the cover structure. Should a thermal event occur, the affected cover plate can respond individually, without necessitating the disassembly of the entire cover structure.

Moreover, the use of multiple cover plates, each configured to be aligned with a single battery cell, reduces the risk of the entire cover structure lifting during a thermal runaway event in a battery cell. By localizing the response to thermal stress, only the cover plate directly above the affected battery cell will activate, thereby maintaining the structural stability of the entire cover structure. The segmented approach to the cover structure enhances the overall safety of the battery system and contributes to the durability and reliability of a battery module by isolating incidents and minimizing their potential impact.

Optionally, in some examples, including in at least one preferred example, the alignment elements of the first and second holding rails are guiding pins and the alignment elements of the cover plates are openings configured to engage with the guiding pins. A technical benefit may include enhanced precision and stability in positioning the cover plates, as well as improved assembly efficiency. The guiding pins and openings facilitate correct alignment, which in turn improves structural integrity and proper function of the cover structure.

Optionally, in some examples, including in at least one preferred example, the first and second holding rails further comprise an adhesive layer arranged on a portion of the respective holding rails configured to receive the cover plates, such that each cover plate is adhesively fixed to the first and second holding rails. A technical benefit may include that the adhesive layer adds stability for the cover plates. The adhesion also reduces the likelihood of cover plate displacement during assembly, ensuring that the entire cover structure is held together during assembly, thereby facilitating moving and rotating the cover structure which may be required when arranging the covers structure in a battery module.

Optionally, in some examples, including in at least one preferred example, the adhesive layer is arranged on a portion of the respective holding rail comprising the alignment elements. A technical benefit may include reinforced structural integrity at the alignment points, which helps maintain a consistent and reliable seal and also aids in the assembly of the cove structure components.

Optionally, in some examples, including in at least one preferred example, the adhesive layer is a double-sided adhesive tape. A technical benefit may include the ease of assembly and the reliable attachment provided without the need for additional fasteners or tools. This type of adhesive allows for a clean application process and can be particularly useful in automated assembly lines, improving production efficiency.

Optionally, in some examples, including in at least one preferred example, the cover plates comprise mica. A technical benefit may include that the high thermal resistance and electrical insulation properties of mica enhances the safety and durability of the cover structure. Mica also contributes to the longevity of the cover plates by resisting thermal degradation over time.

Optionally, in some examples, including in at least one preferred example, the cover plates comprise a reinforced plastic material. A technical benefit may include that a reinforced plastic material can be made strong while also being lightweight, which can contribute to the reduction of overall battery module weight and potentially lower manufacturing costs. Additionally, the reinforcement in the plastic improves its resistance to thermal and mechanical stress, increasing the module's resilience.

Optionally, in some examples, including in at least one preferred example, the cover rails are made from a reinforced plastic material. A technical benefit of plastic cover rails may include the weight reduction they offer. Plastic materials also allow for greater design flexibility and can be manufactured with precision to meet specific requirements. The plastic material may also be a reinforced plastic material.

Optionally, in some examples, including in at least one preferred example, the breakable opening of the cover plate comprises a perforated region. A technical benefit of a perforated breakable opening may include its ability to create a controlled pathway for gas exhaust, which helps manage internal pressures effectively during a thermal runaway. This control is essential for minimizing the risk of damage to adjacent battery cells.

According to second aspect of the disclosure, there is provided a battery module comprising a battery housing holding a plurality of battery cells, each cell comprising a breakable gas vent at an end portion of the respective battery cell; a layer of thermally insulating material covering the plurality of breakable gas vents; and the cover structure according to any one of the preceding claims arranged to cover the thermally insulating layer. A technical benefit may include that the cover structure can be arranged in one piece in the battery module to bring the above described advantages of using one cover plate for each battery cell without having to manually place each cover plate in the correct position when assembling the battery module.

Optionally, in some examples, including in at least one preferred example, the battery module further comprises a battery control component arranged on the plurality of battery cells adjacent to the layer of thermally insulating material. The battery module may for example comprise battery control components arranged on each side of the thermally insulating material and connected to respective poles of each battery cell. A technical benefit may include the close proximity of control components to the cells. Moreover, by arranging the battery control component adjacent to the layer of thermally insulating material, the component is protected by the thermally insulating material in a thermal runaway event.

Optionally, in some examples, including in at least one preferred example, the first and second holding rails are arranged to cover the battery control component. A technical benefit may include added protection of the component against thermal and mechanical stress, which can extend the life of the components and further protect the components in the event of thermal runaway.

Optionally, in some examples, including in at least one preferred example, a portion of the respective holding rail arranged to cover the battery control component is elevated in relation to a portion of the holding rail arranged to receive the cover plates. A technical benefit of this elevated design is the additional space it provides for component housing. Moreover, the distance between the cover structure and the battery cells can be reduced which further ensures that gas from a battery cell is ejected through the breakable opening of the cover plate instead of dissipating sideways to influence adjacent battery cells.

Optionally, in some examples, including in at least one preferred example, the thermally insulating material is a foam material. A technical benefit of using foam as a thermal insulating material may include its low weight and good insulating properties, which can play an important role in preventing thermal propagation within the battery module. Foam materials can also conform to various shapes and spaces, providing a versatile solution for complex module geometries.

Optionally, in some examples, including in at least one preferred example, the thermally insulating material comprises materials such as polyurethane resin, aerogel blanket, glass fiber blanket, and hollow glass fiber strings. A technical benefit of the described materials may include their good thermal management properties, which can reduce the likelihood of thermal runaway spreading between cells. The materials are also known for high durability and resistance to high temperatures, contributing to the long-term reliability of the battery module.

Optionally, in some examples, including in at least one preferred example, the battery module further comprises a protective barrier arranged between the battery control component and the thermally insulating material. A technical benefit may include that an extra layer of mechanical protection is provided, which further protects the battery control components in the event of thermal runaway.

Optionally, in some examples, including in at least one preferred example, the protective barrier comprises an abrasion-resistant material. A technical benefit may include increased durability and resilience to heated gas particles ejected during thermal runaway.

Optionally, in some examples, including in at least one preferred example, the protective barrier is configured to cover the battery control component, the protective barrier being arranged between a portion of the respective holding rail and the battery control component. A technical benefit of may include comprehensive shielding of the control component from potential thermal and mechanical damage.

Optionally, in some examples, including in at least one preferred example, the thermally insulating material is configured to dissipate at a location above the gas vent upon exposure to gas exhaust. A technical benefit may include that the release of gas and particles from a battery cell can be controlled and guided towards the cover plate, thereby preventing further escalation of a thermal runaway.

According to a third aspect of the disclosure, it is provided a vehicle comprising a battery module according to any one of the preceding examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIGs. 1A-B schematically illustrate an exemplary cover structure according to an example.
FIGs. 2A-E schematically illustrate assembly of an exemplary cover structure according to an example.
**FIG. 3** schematically illustrates assembly of a battery module comprising an exemplary cover structure according to an example.
**FIG. 4** schematically illustrates a battery module comprising an exemplary cover structure according to an example.
**FIG. 5** schematically illustrates details of a battery module comprising an exemplary cover structure according to an example.

### DETAILED DESCRIPTION

The detailed description set forth below provides information and examples of the disclosed technology with sufficient detail to enable those skilled in the art to practice the disclosure.

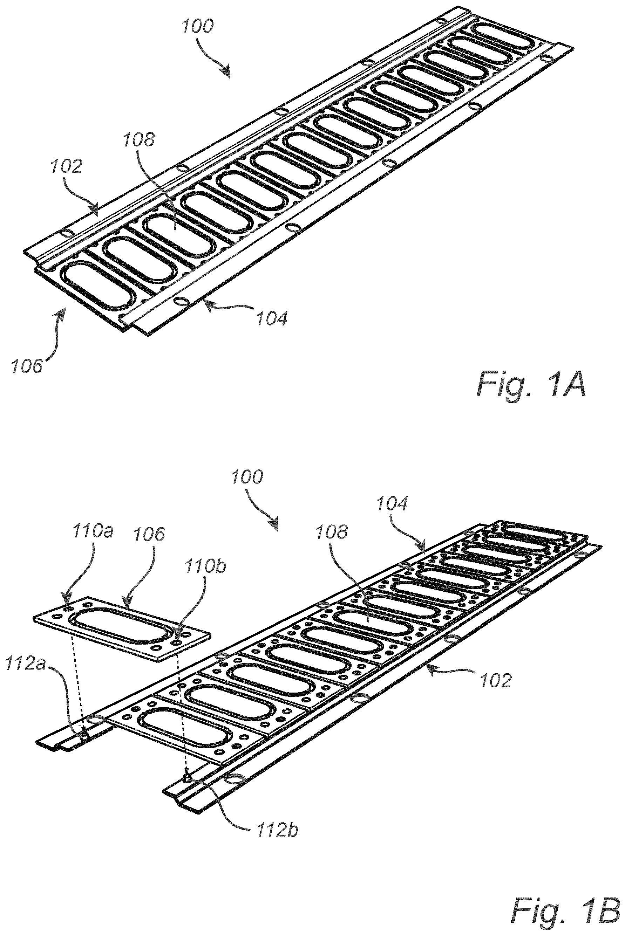

Figs. 1A-B illustrates an exemplary cover structure 100 for a battery module configured to hold a plurality of battery cells. The cover structure 100 comprises a first holding rail 102 and a second holding rail 104, each of the first and second holding rail 102, 104 having corresponding alignment elements 112a-b.

A plurality of abrasion-resistant cover plates 106 are positioned between the first holding rail 102 and the second holding rail 104, wherein each cover plate 106 includes a breakable opening 108 configured to facilitate gas exhaust in the event of a thermal runaway. Each cover plate 106 further comprises alignment elements 110a-b at located at opposing ends of each cover plate 106. The alignment elements 1 10a-b of the cover plate 106 are configured to engage with the corresponding alignment elements 112a-b of the first and second holding rails 102, 104 to position each cover plate 106 between the first and second holding rails 102, 104.

Fig. 1A illustrates the cover structure as it may be installed in a battery module, and Fig. 1B schematically illustrate how cover plates 106 are arranged between the two holding rails 102, 104. In the illustrated example, the alignment elements 112a-b of the first and second holding rails 102, 104 are guiding pins and the alignment elements 1 10a-b of the cover plates 106 are openings configured to engage with the guiding pins. However, many different configurations are possible, such as the use of several guiding pins and/or openings at each end of the cover plate 106, or combinations thereof. Moreover, the positions of the alignment elements do not necessarily need to be centralized as illustrated in the appended drawings, but they may also be located off-center or provided in other configurations.

The cover plates 106 may advantageously comprise mica which has a high resistance to abrasion and elevated temperatures. Mica has a thermal conductivity of approximately of 0.3 W/mK. The cover plates 106 should be abrasion resistant and able to withstand temperatures in the range of 700-1300 °C and above depending on the type of battery cell used, where LFP (Lithium Iron Phosphate) battery cells has a lower gas temperature as compared to NCA (Nickel Cobalt Aluminum) battery cells. The cover plates 106 should also be able to withstand abrasion from particles ejected from a battery cell during thermal runaway. Such particles may mainly consist of graphite. The desired properties of the cover plates 106 can also be achieved by reinforced plastic materials having an additive such as glass fibre. Composite materials incorporating mica or other heat and abrasion resistant materials could also be used. The first and second holding rails 102, 104 can be made from a plastic material.

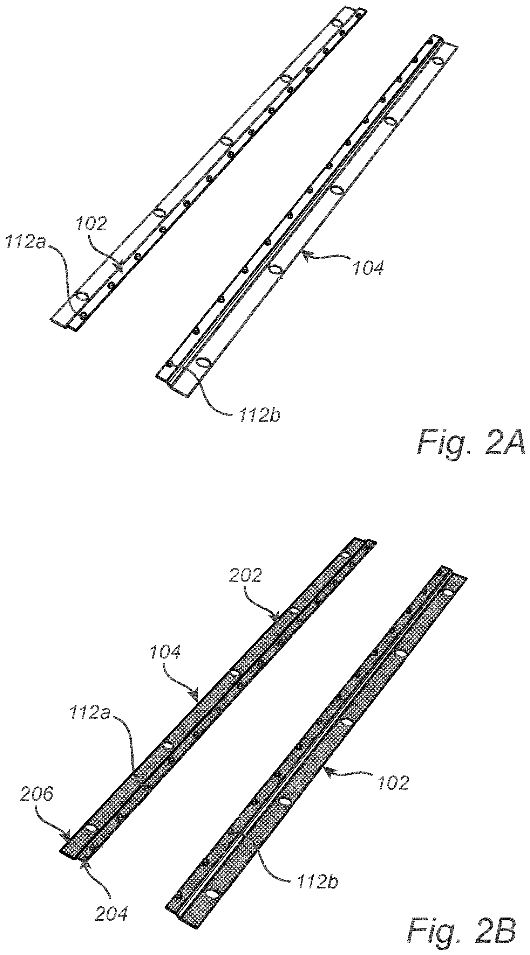

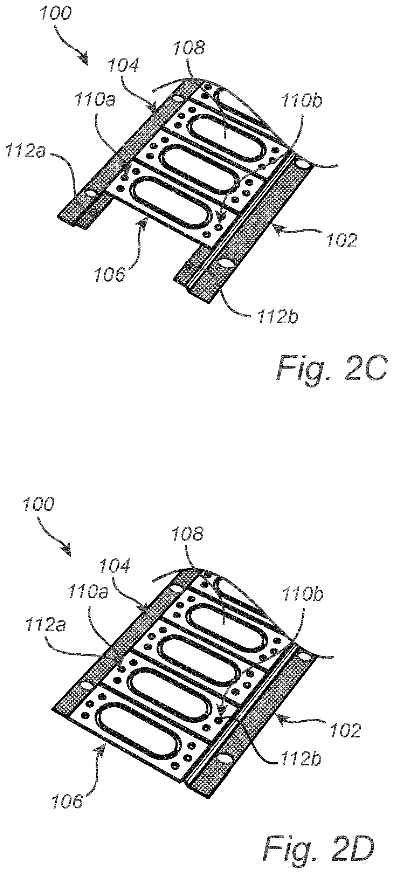

Figs. 2A-E schematically illustrate an assembly process for a cover structure 100 according to an example implementation. In the first step illustrated in Fig. 2A, first and second holding rails 102, 114 comprising guiding pins 112a-b are provided. Next, illustrated in Fig. 2B, and adhesive layer 202 is arranged on the upwards facing sides of the holding rails 102, 114. Here, the adhesive is arranged both on the portions 204 of the holding rails 102, 104 configured to receive the cover plates 106 as well as on the portions 206 which will subsequently be arranged in contact with a battery module. The adhesive layer 202may be a double sided tape, or it may be an adhesive material such as a glue. By using an adhesive for attaching the cover plates 106 to the holding rails 102, 104, the cover structure can be more easily handled during assembly since the risk of cover plates falling off is significantly reduced. Instead of an adhesive layer, it would also be possible to attach the cover plates 106 to the holding rails 102, 104 by means of the alignment elements 1 10a-b, 112a-b, for example by using a snap in or press fit configuration of the alignment elements.

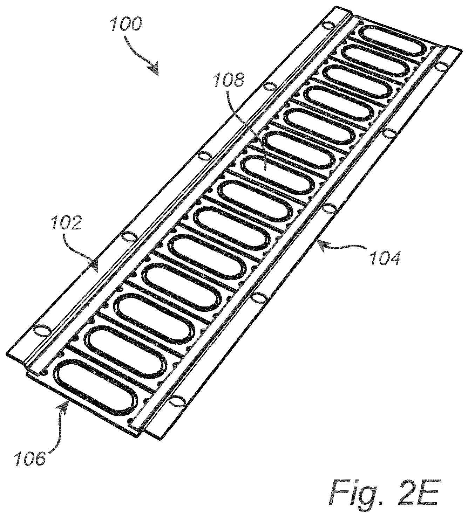

Figs 2C-D further illustrates arranging cover plates 106 on the holding rails to form the finished cover structure 100 of Fig. 2E ready to be installed in a battery module.

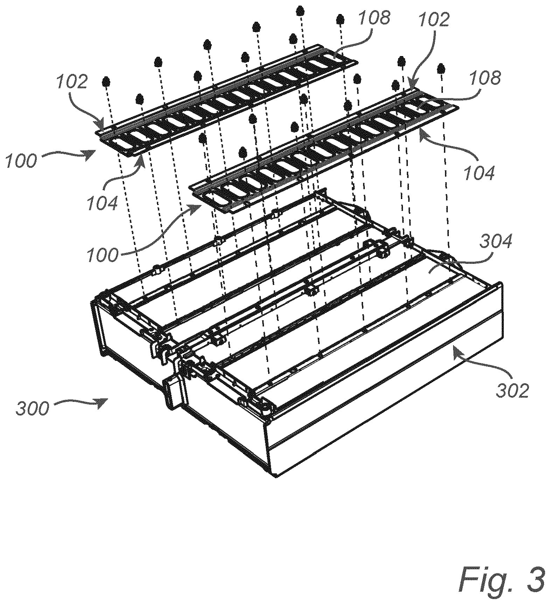

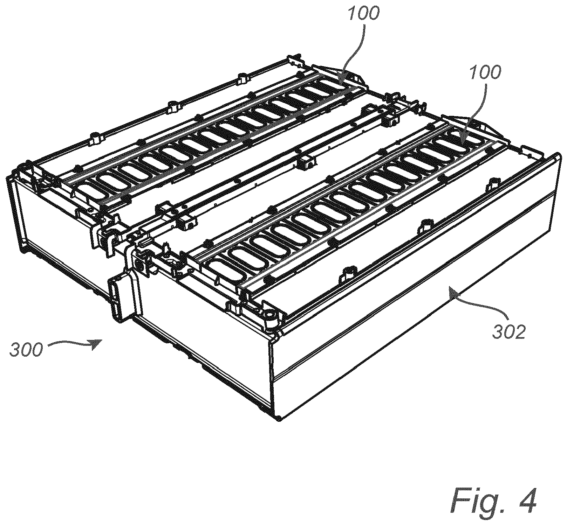

Fig. 3 illustrates installation of the cover structure 100 for a battery module 300 comprising a battery housing 302 holding a plurality of battery cells (not shown). Each cell comprises a breakable gas vent at an end portion of the respective battery cell and a layer of thermally insulating material 304 is arranged to cover the plurality of breakable gas vents. The cover structure 100 is subsequently arranged to cover the thermally insulating layer 304 as illustrated in Fig. 4.

In the described battery module 300, gas and particles ejected from a battery cell is thereby guided through the thermally insulating material 304 and through the breakable opening 108 of the cover structure 100 where the gas flow can be further guided away from the battery module 300.

The thermally insulating material 304 which also may be referred to as a potting material may for example be a foam material or another type of porous material comprising at least one of polyurethane resin, aerogel blanket, glass fiber blanket and hollow glass fiber strings. The insulating layer 304 should preferably be selected from materials having a lower thermal conductivity than the abrasion resistant cover plate 106. Typically, a material having the required hardness to withstand abrasion cannot reach as low thermal conductivities as the foam materials used for thermal insulation. The thermal insulating material may for example have a thermal conductivity lower than 0.3 W/mK.

Furthermore, the thermally insulating material 304 is configured to dissipate at a location above a gas vent of the battery cell if exposed to a gas exhaust through the gas vent. Heated gases and particles can thereby pass through the thermally insulating material 304 in a direction away from the battery cell.

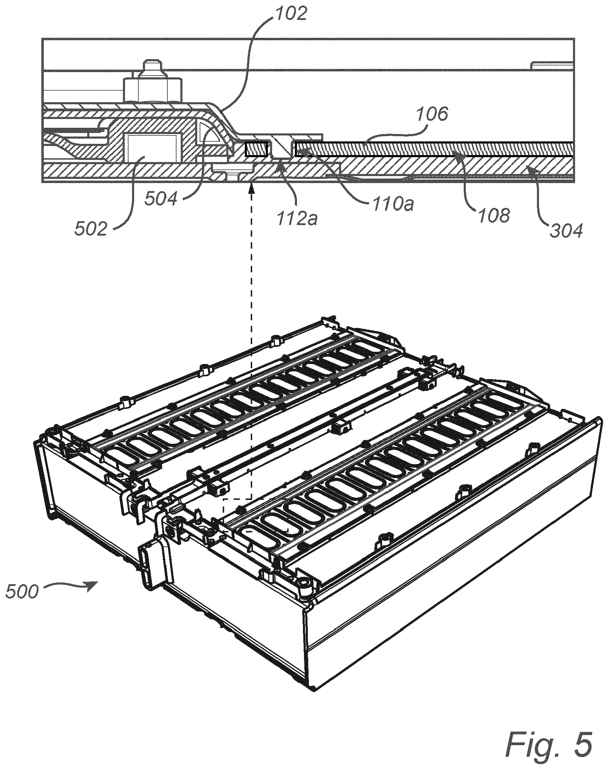

Fig. 5 illustrates a battery module 500 where the zoomed in cross section illustrates that the battery module 500 further comprises a battery control component 502 arranged on the battery cells and adjacent to the layer of thermally insulating material 304.

Moreover, the first and second holding rails 102, 104 are arranged to cover the battery control component 502 as illustrated by the first holding rail 102 in Fig. 5. Thereby, the gas flow in the event of thermal runaway is entirely separated from the battery control component 502 providing additional protection. It is also illustrated that a portion of the first holding rail 102 arranged to cover the battery control component 502 is elevated in relation to a portion of the first holding rail 102 arranged to receive and hold the cover plate 106. The lower portion can thereby form a vent channel further separating a potential gas flow from the battery control components 502.

The battery module 500 of Fig. 5 further comprises a protective barrier 504 arranged between the battery control component 502 and the thermally insulating material 108, and the protective barrier preferably comprises an abrasion resistant material such as mica to provide additional protection to the battery control components. In particular, the protective barrier 504 is arranged to cover the battery control component 502 which is achieved by arranging the protective barrier 504 between a portion of the holding rail 102 and the battery control component 502. The protective barrier 504 may for example be a preformed plate made of mica providing the advantageous properties described above.

Example 1. A cover structure (100) for a battery module configured to hold a plurality of battery cells, the cover structure comprising: a first holding rail (102) and a second holding rail (104), each holding rail having corresponding alignment elements (112a-b); and a plurality of abrasion-resistant cover plates (106) positioned between the first holding rail and the second holding rail, wherein each cover plate includes a breakable opening (108) configured to facilitate gas exhaust in the event of a thermal runaway; and each cover plate comprises alignment elements (110a-b) at opposing ends, the alignment elements being configured to engage with the corresponding alignment elements (112a-b) of the first and second holding rails to position each cover plate between the first and second holding rails.

Example 2. The cover structure according to example 1, wherein the alignment elements of the first and second holding rails are guiding pins and wherein the alignment elements of the cover plates are openings configured to engage with the guiding pins.

Example 3. The cover structure according to example 1 or 2, wherein the first and second holding rails further comprise an adhesive layer (114) arranged on a portion of the respective holding rails configured to receive the cover plates, such that each cover plate is adhesively fixed to the first and second holding rails.

Example 4. The cover structure according to example 3, wherein the adhesive layer is arranged on a portion of the respective holding rail comprising the alignment elements.

Example 5. The cover structure according to example 3 or 4, wherein the adhesive layer is a double-sided adhesive tape.

Example 6. The cover structure according to any one of the preceding examples, wherein the cover plates comprise mica.

Example 7. The cover structure according to any one of examples 1 to 5, wherein the cover plates comprise a reinforced plastic material.

Example 8. The cover structure according to any one of the preceding examples, wherein the holding rails are made from a plastic material.

Example 9. The cover structure according to any one of the preceding examples, wherein the breakable opening of the cover plate comprises a perforated region.

Example 10. A battery module comprising a battery housing holding a plurality of battery cells, each cell comprising a breakable gas vent at an end portion of the respective battery cell; a layer of thermally insulating material covering the plurality of breakable gas vents; and the cover structure according to any one of the preceding examples arranged to cover the thermally insulating layer.

Example 11. The battery module according to example 9, further comprising a battery control component (502) arranged on the plurality of battery cells adjacent to the layer of thermally insulating material, on each side of the thermally insulating material.

Example 12. The battery module according to examples 11, wherein the first and second holding rails are arranged to cover the battery control component.

Example 13. The battery module according to example 12, wherein a portion of the respective holding rail arranged to cover the battery control component is elevated in relation to a portion of the holding rail arranged to receive the cover plates.

Example 14. The battery module according to any one of the preceding examples, wherein the thermally insulating material is a foam material.

Example 15. The battery module according to any one of examples 10 to 14, wherein the thermally insulating material comprises at least one of polyurethane resin, aerogel blanket, glass fiber blanket and hollow glass fiber strings.

Example 16. The battery module according to any one of examples 10 to 15, further comprising a protective barrier (504) arranged between the battery control component and the thermally insulating material.

Example 17. The battery module according to example 16, wherein the protective barrier comprises an abrasion resistant material.

Example 18. The battery module according to example 16, wherein the protective barrier is configured to cover the battery control component, the protective barrier being arranged between a portion of the respective holding rail and the battery control component.

Example 19. The battery module according to any one of examples 10 to 18, wherein the thermally insulating material is configured to dissipate at a location above the has vent if exposed to a gas exhaust through the gas vent.

Example 20. A vehicle comprising a battery module according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cover structure (100) for a battery module configured to hold a plurality of battery cells, the cover structure comprising:
a first holding rail (102) and a second holding rail (104), each holding rail having corresponding alignment elements (112a-b); and
a plurality of abrasion-resistant cover plates (106) positioned between the first holding rail and the second holding rail, wherein each cover plate includes a breakable opening (108) configured to facilitate gas exhaust in the event of a thermal runaway; wherein
each cover plate comprises alignment elements (110a-b) at opposing ends, the alignment elements being configured to engage with the corresponding alignment elements (112a-b) of the first and second holding rails to position each cover plate between the first and second holding rails.

2. The cover structure according to claim 1, wherein the alignment elements of the first and second holding rails are guiding pins and wherein the alignment elements of the cover plates are openings configured to engage with the guiding pins.

3. The cover structure according to claim 1 or 2, wherein the first and second holding rails further comprise an adhesive layer (202) arranged on a portion of the respective holding rails configured to receive the cover plates, such that each cover plate is adhesively fixed to the first and second holding rails.

4. The cover structure according to claim 3, wherein the adhesive layer is arranged on a portion of the respective holding rail comprising the alignment elements.

5. The cover structure according to claim 3 or 4, wherein the adhesive layer is a double-sided adhesive tape.

6. A battery module comprising a battery housing holding a plurality of battery cells, each cell comprising a breakable gas vent at an end portion of the respective battery cell;
a layer of thermally insulating material covering the plurality of breakable gas vents; and
the cover structure according to any one of the preceding claims arranged to cover the thermally insulating layer.

7. The battery module according to claim 6, further comprising a battery control component (502) arranged on the plurality of battery cells adjacent to the layer of thermally insulating material.

8. The battery module according to claim 7, wherein the first and second holding rails are arranged to cover the battery control component.

9. The battery module according to claim 8, wherein a portion of the respective holding rail arranged to cover the battery control component is elevated in relation to a portion of the holding rail arranged to receive the cover plates.

10. The battery module according to any one of claims 6 to 9, wherein the thermally insulating material comprises at least one of polyurethane resin, aerogel blanket, glass fiber blanket and hollow glass fiber strings.

11. The battery module according to any one of claims 6 to 10, further comprising a protective barrier (504) arranged between the battery control component and the thermally insulating material.

12. The battery module according to claim 11, wherein the protective barrier comprises an abrasion resistant material.

13. The battery module according to claim 11 or 12, wherein the protective barrier is configured to cover the battery control component, the protective barrier being arranged between a portion of the respective holding rail and the battery control component.

14. The battery module according to any one of claims 6 to 13, wherein the thermally insulating material is configured to dissipate at a location above the vent if exposed to a gas exhaust through the gas vent.

15. A vehicle comprising a battery module according to any one of claim 6 to 14.
